# EUROPEAN PATENT APPLICATION

(11) **EP 4 525 089 A1**
(43) Date of publication of application: **19.03.2025**
(21) Application number: 22962489.5
(22) Date of filing: 21.10.2022
(51) Int. Cl.: H01M 4/587

(54) **CARBONACEOUS MATERIAL AND PREPARATION METHOD THEREFOR, SECONDARY BATTERY COMPRISING SAME, AND ELECTRICAL DEVICE**

(71) Applicant: Contemporary Amperex Technology (Hong Kong) Limited, Central, Central And Western District (HK)
(72) Inventor: MA, Yu, Ningde, Fujian 352100 (CN); ZHANG, Xinxin, Ningde, Fujian 352100 (CN); CHEN, Xiaoxia, Ningde, Fujian 352100 (CN); OUYANG, Chuying, Ningde, Fujian 352100 (CN); LIN, Wenguang, Ningde, Fujian 352100 (CN); CHEN, Shangdong, Ningde, Fujian 352100 (CN); CHENG, Weiming, Ningde, Fujian 352100 (CN); ZHENG, Xiaoji, Ningde, Fujian 352100 (CN)
(74) Representative: Jacob, Reuben Ellis
(86) International application number: PCT/CN2022/126836
(87) International publication number: WO 2024/082308

(57) **Abstract**

A carbonaceous material, a preparation method thereof, and a secondary battery and electric apparatus containing the same are provided. The carbonaceous material has an adsorption velocity v that satisfies 0.015 ≤ v ≤ 0.050 when subjected to an adsorption test using water vapor at a constant temperature and humidity of 25°C and 40% RH. The water vapor adsorption test is performed under the following conditions: in a constant temperature and humidity chamber at 25°C and 40% RH, the carbonaceous material with a mass of m₁ is placed in a container, and a water vapor adsorption mass m₂ and a water vapor adsorption time t are recorded when the water vapor adsorption of the carbonaceous material reaches equilibrium, and the water vapor adsorption velocity is v = m₂/(m₁ × t), where m₁ is measured in g, m₂ is measured in g, and t is measured in h. The carbonaceous material provided in this application can have high gram capacity, high first-cycle coulombic efficiency, and high structural stability.

## Description

### TECHNICAL FIELD

This application pertains to the field of battery technologies, and specifically relates to a carbonaceous material, a preparation method thereof, and a secondary battery and electric apparatus containing the same.

### BACKGROUND

In recent years, secondary batteries have been widely used in energy storage power supply systems such as hydroelectric, thermal, wind, and solar power plants, and many other fields including electric tools, electric bicycles, electric motorcycles, electric vehicles, military equipment, and aerospace. With the application and popularization of secondary batteries, their energy density, service life, and rate performance have received increasing attention. Graphite is the most commonly used negative electrode active material for secondary batteries, but its theoretical gram capacity is only 372 mAh/g, which leaves limited room for improvement in energy density. In addition, the interlayer spacing of graphite is small, which limits improvement in rate performance. Hard carbon, as a new negative electrode active material, allows for rapid intercalation and deintercalation of active ions during charging and discharging of secondary batteries, making it highly promising. However, hard carbon has low gram capacity and first-cycle coulombic efficiency, which limits improvement in energy density, service life, and rate performance of secondary batteries.

### SUMMARY

This application is intended to provide a carbonaceous material, a preparation method thereof, and a secondary battery and electric apparatus containing the same, where the carbonaceous material can have high gram capacity, high first-cycle coulombic efficiency, and high structural stability, and can allow the secondary battery to simultaneously have high energy density, long service life, and good rate performance.

A first aspect of this application provides a carbonaceous material. The carbonaceous material has an adsorption velocity v that satisfies 0.015 ≤ v ≤ 0.050 when subjected to an adsorption test using water vapor at a constant temperature and humidity of 25°C and 40% RH, where the water vapor adsorption test is performed under the following conditions: in a constant temperature and humidity chamber at 25°C and 40% RH, the carbonaceous material with a mass of m₁ is placed in a container, and a water vapor adsorption mass m₂ and a water vapor adsorption time t are recorded when the water vapor adsorption of the carbonaceous material reaches equilibrium, and the water vapor adsorption velocity is v = m₂/(m₁ × t), where m₁ is measured in g, m₂ is measured in g, and t is measured in h.

Compared with currently commercialized carbonaceous materials, the carbonaceous material provided in this application can have high gram capacity, high first-cycle coulombic efficiency, and high structural stability, and can allow a secondary battery to simultaneously have high energy density, long service life, and good rate performance. Although the mechanism is not clear, the inventors of this application have speculated that one possible reason is that when the water vapor adsorption velocity v is between 0.015 and 0.050, the carbonaceous material of this application has high structural stability and unique pore structures, which can facilitate intercalation, storage, and deintercalation of active ions, so the carbonaceous material of this application can have high gram capacity and first-cycle coulombic efficiency, and can allow the secondary battery to simultaneously have high energy density, long service life, and good rate performance.

In any implementation of this application, 0.020 ≤ v ≤ 0.050. This helps to further improve the gram capacity, first-cycle coulombic efficiency, and structural stability of the carbonaceous material, thereby further improving the energy density, service life, and rate performance of the secondary battery.

In any implementation of this application, when the water vapor adsorption of the carbonaceous material reaches equilibrium, the water vapor adsorption time t is 1 h-12 h, and optionally 4.5 h-7 h. When the water vapor adsorption of the carbonaceous material reaches equilibrium, the water vapor adsorption time satisfying the foregoing specified range helps to further improve the gram capacity, first-cycle coulombic efficiency, and structural stability of the carbonaceous material, thereby further improving the energy density, service life, and rate performance of the secondary battery.

In any implementation of this application, a true density ρ of the carbonaceous material is 1.0 g/cm³-2.2 g/cm³, and optionally 1.3 g/cm³-1.7 g/cm³. The true density of the carbonaceous material satisfying the foregoing specified range helps to further improve the gram capacity and first-cycle coulombic efficiency of the carbonaceous material.

In any implementation of this application, the carbonaceous material includes a plurality of nanoporous structures, and optionally the carbonaceous material includes a plurality of pore structures with a pore size below 10 nm.

In any implementation of this application, in a Raman spectrum of the carbonaceous material, I_{d}/I_{g} is 1.0-1.3, and optionally 1.05-1.15, where I_{d} represents an intensity of a peak d at a Raman shift within a range of 1350 ± 50 cm⁻¹, and I_{g} represents an intensity of a peak g at a Raman shift within a range of 1580 ± 50 cm⁻¹. In this case, the carbonaceous material has higher gram capacity, higher first-cycle coulombic efficiency, and good rate performance.

In any implementation of this application, an interlayer spacing of a (002) crystal plane of the carbonaceous material is ≥ 0.37 nm, and optionally 0.37 nm-0.42 nm.

In any implementation of this application, in an X-ray diffraction pattern of the carbonaceous material, a value of 2θ corresponding to a (002) crystal plane peak is between 22° and 24°.

In any implementation of this application, a particle size by volume Dᵥ50 of the carbonaceous material is 4 µm-6 µm.

In any implementation of this application, a particle size by volume Dᵥ90 of the carbonaceous material is 8 µm-16 µm.

The particle size by volume Dᵥ50 and/or Dᵥ90 of the carbonaceous material being within a suitable range helps to improve transport performance for active ions and electrons, thereby further improving the rate performance of the secondary battery.

In any implementation of this application, a specific surface area of the carbonaceous material is 0.1 m²/g-20 m²/g, and optionally 1 m²/g-20 m²/g. With the specific surface area of the carbonaceous material being within a suitable range, the carbonaceous material can simultaneously have higher gram capacity and first-cycle coulombic efficiency and better rate performance.

In any implementation of this application, a powder compacted density of the carbonaceous material under a force of 50000 N is 0.90 g/cm³-1.05 g/cm³, and optionally 0.92 g/cm³-1.02 g/cm³. The powder compacted density of the carbonaceous material being within a suitable range can improve a compacted density of a negative electrode plate, thereby improving the energy density of the secondary battery.

In any implementation of this application, a tap density of the carbonaceous material is 0.78 g/cm³-0.95 g/cm³, and optionally 0.83 g/cm³-0.93 g/cm³. The tap density of the carbonaceous material being within a suitable range can improve the compacted density of the negative electrode plate, thereby improving the energy density of the secondary battery.

A second aspect of this application provides a preparation method of carbonaceous material, including the following steps: S10. providing a carbon source: the carbon source is a cellulose-based biomass material; S20. performing low-temperature pre-carbonization: in a protective gas atmosphere, the carbon source is heated to a first temperature T1 at a first temperature rise velocity and maintained at that temperature for a first time t1 to obtain a first intermediate product; and S30. performing high-temperature carbonization: in the protective gas atmosphere, the obtained first intermediate product is heated to a second temperature T2 at a second temperature rise velocity and maintained at that temperature for a second time t2 to obtain a carbonaceous material, where the carbonaceous material has an adsorption velocity v that satisfies 0.015 ≤ v ≤ 0.050 when subjected to an adsorption test using water vapor at a constant temperature and humidity of 25°C and 40% RH, where the water vapor adsorption test is performed under the following conditions: in a constant temperature and humidity chamber at 25°C and 40% RH, the carbonaceous material with a mass of m₁ is placed in a container, and a water vapor adsorption mass m₂ and a water vapor adsorption time t are recorded when the water vapor adsorption of the carbonaceous material reaches equilibrium, and the water vapor adsorption velocity is v = m₂/(m₁ × t), where m₁ is measured in g, m₂ is measured in g, and t is measured in h.

The carbonaceous material obtained by using the preparation method provided in this application can have high gram capacity, high first-cycle coulombic efficiency, and high structural stability, and can allow a secondary battery to simultaneously have high energy density, long service life, and good rate performance. In addition, compared with existing commercialized hard carbon, the carbonaceous material obtained by using the preparation method in this application has significantly improved gram capacity, first-cycle coulombic efficiency, and rate performance.

In any implementation of this application, in the cellulose-based biomass material, a cellulose content is greater than 0wt% and less than or equal to 100wt%, and an ash content is 0wt%-5wt%.

In any implementation of this application, in the cellulose-based biomass material, a cellulose content is greater than or equal to 20wt% and less than 100wt%, and an ash content is 0wt%-5wt%.

In any implementation of this application, in the cellulose-based biomass material, a cellulose content is greater than 0wt% and less than or equal to 100wt%, and an ash content is 0wt%-2wt%.

In any implementation of this application, in the cellulose-based biomass material, a cellulose content is greater than or equal to 20wt% and less than 100wt%, and an ash content is 0wt%-2wt%.

In any implementation of this application, in the cellulose-based biomass material, a hemicellulose content is 0wt%-70wt%, and optionally 0wt%-30wt%.

In any implementation of this application, in the cellulose-based biomass material, a lignin content is 0wt%-60wt%, and optionally 10wt%-60wt%.

Adjusting the contents of one or more of cellulose, ash, hemicellulose, and lignin in the cellulose-based biomass material to satisfy the foregoing ranges helps the obtained carbonaceous material to have high gram capacity, high first-cycle coulombic efficiency, and high structural stability, thereby further improving the energy density, service life, and rate performance of the secondary battery.

In any implementation of this application, the cellulose-based biomass material includes one or more of woody biomass materials, optionally includes one or more of hardwood, softwood, and nut shell, and more optionally includes one or more of pine, moso bamboo, and walnut shell.

In any implementation of this application, the first temperature rise velocity is 1°C/min-10°C/min, and optionally 1°C/min-3°C/min.

In any implementation of this application, the first temperature T1 is 150°C-1000°C, and optionally 300°C-700°C.

In any implementation of this application, the first time t1 is 1 h-20 h, and optionally 5 h-20 h.

In S20, adjusting one or more of the first temperature rise velocity, the first temperature, and the first time to be within the foregoing ranges helps to better control the carbon skeleton structure and surface, improve the effect of low-temperature pre-carbonization, and obtain a carbonaceous material with a suitable water vapor adsorption velocity.

In any implementation of this application, the second temperature rise velocity is ≤ 10°C/min, and optionally 0.5°C/min-10°C/min.

In any implementation of this application, the second temperature T2 is 1000°C-1600°C, and optionally 1200°C-1500°C.

In any implementation of this application, the second time t2 is 1 h-12 h, and optionally 3 h-10 h.

In S30, adjusting one or more of the second temperature rise velocity, the second temperature, and the second time to be within the foregoing ranges helps to improve the closed-pore effect of the pore structures, improve the effect of high-temperature carbonization, and obtain a carbonaceous material with a suitable water vapor adsorption velocity.

In any implementation of this application, t1 + t2 is 10 h-30 h. This helps the obtained carbonaceous material to have a suitable water vapor adsorption velocity, high capacity, high first-cycle coulombic efficiency, and high structural stability.

In any implementation of this application, after S20 and before S30, the method further includes the following step: crushing the first intermediate product obtained in S20, or washing and purifying the first intermediate product obtained in S20, or crushing and then washing and purifying the first intermediate product obtained in S20, to obtain a first intermediate product with an ash content of ≤ 0.01wt%, where the washing and purifying process includes at least an acidic solution washing step and an alkaline solution washing step. This helps to further improve the gram capacity, first-cycle coulombic efficiency, and structural stability of the carbonaceous material, and also helps to reduce the true density of the carbonaceous material.

In any implementation of this application, the washing and purifying process sequentially includes the following steps: acidic solution washing, water washing, alkaline solution washing, water washing, and drying; or the washing and purifying process sequentially includes the following steps: alkaline solution washing, water washing, acidic solution washing, water washing, and drying.

In any implementation of this application, an H⁺ concentration of the acidic solution is 0.1 mol/L-6 mol/L, and optionally 1 mol/L-6 mol/L.

In any implementation of this application, a washing temperature of the acidic solution is 10°C-95°C, and optionally 30°C-95°C.

In any implementation of this application, a washing time of the acidic solution is 1 h-24 h, and optionally 10 h-24 h.

In any implementation of this application, in the acidic solution, a solute includes one or more of hydrochloric acid, nitric acid, sulfuric acid, and perchloric acid, and a solvent includes water.

Adjusting one or more of the H⁺ concentration, the washing temperature, the washing time, and the solute type of the acidic solution to be within the foregoing ranges helps to achieve sufficient washing and better remove metal impurities.

In any implementation of this application, an OH⁻ concentration of the alkaline solution is 0.1 mol/L-6 mol/L, and optionally 1 mol/L-6 mol/L.

In any implementation of this application, a washing temperature of the alkaline solution is 10°C-95°C, and optionally 30°C-95°C.

In any implementation of this application, a washing time of the alkaline solution is 1 h-24 h, and optionally 10 h-24 h.

In any implementation of this application, in the alkaline solution, a solute includes NaOH, KOH, or a combination thereof, and a solvent includes water.

Adjusting one or more of the OH⁻ concentration, the washing temperature, the washing time, and the solute type of the alkaline solution to be within the foregoing ranges helps to achieve sufficient washing.

A third aspect of this application provides a secondary battery including a negative electrode plate, where the negative electrode plate includes the carbonaceous material according to the first aspect of this application or a carbonaceous material prepared by using the method according to the second aspect of this application.

A fourth aspect of this application provides an electric apparatus including the secondary battery according to the third aspect of this application.

The carbonaceous material provided in this application can have high gram capacity, high first-cycle coulombic efficiency, and high structural stability, and can allow the secondary battery to simultaneously have high energy density, long service life, and good rate performance. The electric apparatus of this application includes the secondary battery provided in this application, and therefore has at least the same advantages as the secondary battery.

### BRIEF DESCRIPTION OF DRAWINGS

To describe the technical solutions of the embodiments of this application more clearly, the following briefly describes the accompanying drawings for describing the embodiments of this application. Apparently, the accompanying drawings in the following descriptions show merely some embodiments of this application, and persons of ordinary skill in the art may derive other drawings from these accompanying drawings without creative efforts.
FIG. 1 is a schematic diagram of a battery cell according to an embodiment of this application.
FIG. 2 is a schematic exploded view of a battery cell according to an embodiment of this application.
FIG. 3 is a schematic diagram of a battery module according to an embodiment of this application.
FIG. 4 is a schematic diagram of a battery pack according to an embodiment of this application.
FIG. 5 is a schematic exploded view of the battery pack according to the embodiment shown in FIG. 4.
FIG. 6 is a schematic diagram of an electric apparatus using a secondary battery of this application as a power source according to an embodiment.
FIG. 7 to FIG. 9 are scanning electron microscope images of a carbonaceous material provided in this application at different magnifications.

In the accompanying drawings, the figures are not necessarily drawn to scale. Reference signs are as follows: 1. battery pack, 2. upper box body, 3. lower box body, 4. battery module, 5. battery cell, 51. housing, 52. electrode assembly, and 53. cover plate.

### DESCRIPTION OF EMBODIMENTS

The following specifically discloses in detail embodiments of the carbonaceous material, preparation method thereof, and secondary battery and electric apparatus containing the same of this application, with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions, and such technical solutions should be considered to be included in the disclosure of this application.

Unless otherwise specified, all the technical features and optional technical features of this application can be combined with each other to form new technical solutions, and such technical solutions should be considered to be included in the disclosure of this application.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B" : A is true (or present) and B is false (or not present); A is false (or not present) and B is true (or present); or both A and B are true (or present).

Unless otherwise specified, the terms used in this application have well-known meanings as commonly understood by persons skilled in the art.

Unless otherwise specified, numerical values of parameters mentioned in this application may be measured by using various measurement methods commonly used in the art, for example, they may be measured by using the measurement methods provided in this application.

Unless otherwise specified, in this application, the term "active ions" refers to ions that can be intercalated and deintercalated between a positive electrode and a negative electrode of a secondary battery, including but not limited to lithium ions and sodium ions.

In this application, the term "a plurality of" means two or more than two and the term "a plurality of types" means two or more than two types.

As defined by the International Union of Pure and Applied Chemistry (IUPAC), micropores (Micropores) refer to pores with a pore size of < 2 nm, mesopores (Mesopores) refer to pores with a pore size of 2 nm-50 nm, and macropores (Macropores) refer to pores with a pore size of > 50 nm.

In the context of this application, the term "micropores" refers to pores with a pore size of < 2 nm, the term "mesopores" refers to pores with a pore size of 2 nm-50 nm, and the term "macropores" refers to pores with a pore size of > 50 nm.

In the context of this application, the term "small mesopores" refers to pores with a pore size of 2 nm-10 nm, and the term "large mesopores" refers to pores with a pore size greater than 10 nm and less than or equal to 50 nm.

In the context of this application, the term "capillary pores" refers to micropores and/or small mesopores, that are, pores with a pore size of ≤ 10 nm.

In the context of this application, the terms "large pores" and "small pores" indicate relative concepts.

With the application and popularization of secondary batteries, their energy density, service life, and rate performance have received increasing attention. The performance of negative electrode active materials determines the energy density, service life, and safety of secondary batteries to some extent. Graphite (including natural graphite and artificial graphite) is the most commonly used negative electrode active material for secondary batteries, but its theoretical gram capacity is only 372 mAh/g, which leaves limited room for improvement in energy density. In addition, the interlayer spacing of graphite is small, which limits improvement in rate performance and is not able to meet the actual demand of secondary batteries with high rate performance.

Compared with graphite, hard carbon has a larger interlayer spacing, which is conducive to rapid intercalation and deintercalation of active ions, so that the secondary battery can have excellent low-temperature performance, power performance, and safety performance. Especially in the field of traction batteries, hard carbon has unique advantages. However, most of the currently commercialized hard carbon is low-capacity hard carbon with low capacity and first-cycle coulombic efficiency, for example, the capacity is usually between 200 mAh/g and 280 mAh/g, and the first-cycle coulombic efficiency is usually lower than 75%, which seriously limits its practical application.

Therefore, how both the gram capacity and first-cycle coulombic efficiency of hard carbon are improved is still an urgent technical problem that needs to be solved.

In view of this, the first aspect of the implementations of this application provides a carbonaceous material. The carbonaceous material has high gram capacity, high first-cycle coulombic efficiency, and high structural stability, and can allow a secondary battery to simultaneously have high energy density, long service life, and good rate performance.

### Carbonaceous material

The carbonaceous material provided in this application has an adsorption velocity v that satisfies 0.015 ≤ v ≤ 0.050 when subjected to an adsorption test using water vapor at a constant temperature and humidity of 25°C and 40% RH.

The water vapor adsorption test is performed under the following conditions: in a constant temperature and humidity chamber at 25°C and 40% RH, the carbonaceous material with a mass of m₁ is placed in a container, and a water vapor adsorption mass m₂ and a water vapor adsorption time t are recorded when the water vapor adsorption of the carbonaceous material reaches equilibrium, and the water vapor adsorption velocity is v = m₂/(m₁ × t), where m₁ is measured in g, m₂ is measured in g, and t is measured in h. In the container, stack thickness of the carbonaceous material is ≤ 5 mm.

In the water vapor adsorption test, when a total mass of the carbonaceous material with water vapor adsorbed is no longer increased, it is considered that the water vapor adsorption of the carbonaceous material reaches equilibrium, and the test time at that point is recorded as the water vapor adsorption time t. An initial mass m₁ of the carbonaceous material is subtracted from the total mass of the carbonaceous material obtained at that point to obtain the water vapor adsorption mass m₂ (that is, the mass increased when the water vapor adsorption of the carbonaceous material reaches equilibrium).

RH (Relative Humidity) represents relative humidity, which is the percentage of the water vapor pressure in the air to the saturated vapor pressure of water at the same temperature.

Compared with currently commercialized carbonaceous materials, the carbonaceous material provided in this application can have high gram capacity, high first-cycle coulombic efficiency, and high structural stability, and can allow a secondary battery to simultaneously have high energy density, long service life, and good rate performance. Although the mechanism is not clear, the inventors of this application have speculated that one possible reason is that when the water vapor adsorption velocity v is between 0.015 and 0.050, the carbonaceous material of this application has high structural stability and unique pore structures, which can facilitate intercalation, storage, and deintercalation of active ions, so the carbonaceous material of this application can have high gram capacity and first-cycle coulombic efficiency, and can allow the secondary battery to simultaneously have high energy density, long service life, and good rate performance.

The inventors of this application have found during research that at a constant temperature and humidity of 25°C and 40% RH, the water vapor is preferentially adsorbed into capillary pore structures (that are, microporous structures and/or small mesoporous structures) of the carbonaceous material, and generally does not enter large mesoporous structures and/or macroporous structures of the carbonaceous material. Therefore, the water vapor adsorption velocity v at a constant temperature and humidity of 25°C and 40% RH can intuitively reflect the proportion of suitable active ion storage sites in the carbonaceous material.

When the water vapor adsorption velocity v is less than 0.015, it is considered that few capillary pore structures are contained inside the carbonaceous material, and the pore structures are mostly large mesoporous structures and/or macroporous structures, so the carbonaceous material has poor structural stability and contains few spaces capable of accommodating active ions inside, which is unsuitable for the storage of active ions, resulting in low gram capacity of the carbonaceous material. In addition, because the pore structures are mostly large mesoporous structures and/or macroporous structures, the proportion of the electrolyte infiltration region inside the carbonaceous material is increased, which leads to increased consumption of active ions during formation of a solid electrolyte interface film (hereinafter referred to as the SEI film) and increased initial irreversible capacity loss, resulting in low gram capacity and first-cycle coulombic efficiency of the carbonaceous material.

When the water vapor adsorption velocity v is greater than 0.050, it is considered that a specific surface area of the carbonaceous material is high, which leads to increased consumption of active ions during the formation of the SEI film and increased initial irreversible capacity loss, resulting in reduced first-cycle coulombic efficiency. In addition, the carbonaceous material has strong water absorption. During preparation and use of the secondary battery, some water molecules are firmly bonded with functional groups (for example, oxygen-containing functional groups) on the surface of the carbonaceous material through chemical bonds, so it is difficult for the water molecules to detach and in turn block capillary pore structures of the carbonaceous material and hinder intercalation and deintercalation of active ions. Moreover, the water molecules adsorbed on the surface of the carbonaceous material may react with the electrolyte, resulting in reduced gram capacity and first-cycle coulombic efficiency of the carbonaceous material.

In some embodiments, v may be 0.016, 0.018, 0.020, 0.022, 0.024, 0.026, 0.028, 0.030, 0.032, 0.034, 0.036, 0.038, 0.040, 0.042, 0.044, 0.046, 0.048, 0.050, or within a range defined by any values within the foregoing range, and optionally, 0.018 ≤ v ≤ 0.050 or 0.020 ≤ v ≤ 0.050. This helps to further improve the gram capacity, first-cycle coulombic efficiency, and structural stability of the carbonaceous material, thereby further improving the energy density, service life, and rate performance of the secondary battery.

In some embodiments, when the water vapor adsorption of the carbonaceous material reaches equilibrium, the water vapor adsorption time t is 1 h-12 h. Optionally, when the water vapor adsorption of the carbonaceous material reaches equilibrium, the water vapor adsorption time t is 3 h-12 h, 4 h-12 h, 4 h-9 h, or 4.5 h-7 h. The inventors have found in further research that when the water vapor adsorption of the carbonaceous material reaches equilibrium, the water vapor adsorption time satisfying the foregoing specified range helps to further improve the gram capacity, first-cycle coulombic efficiency, and structural stability of the carbonaceous material, thereby further improving the energy density, service life, and rate performance of the secondary battery.

When the water vapor adsorption time is long, it is considered that the carbonaceous material contains many capillary pore structures, and in this case, the skeleton structure of the carbonaceous material is fragile and is prone to collapse to form large pores, which leads to an increased proportion of the electrolyte infiltration region inside the carbonaceous material and increased initial irreversible capacity loss, resulting in reduced first-cycle coulombic efficiency. When the water vapor adsorption time is short, it is considered that the carbonaceous material contains few capillary pore structures, which is not suitable for intercalation, storage, and deintercalation of active ions, resulting in reduced gram capacity and first-cycle coulombic efficiency of the carbonaceous material.

In some embodiments, the carbonaceous material includes a plurality of nanoporous structures. Optionally, the carbonaceous material includes a plurality of pore structures with a pore size below 10 nm. In some embodiments, the carbonaceous material may further include one or more pore structures with a pore size greater than 10 nm.

In some embodiments, a true density ρ of the carbonaceous material is 1.0 g/cm³-2.2 g/cm³, and optionally 1.3 g/cm³-2.0 g/cm³, 1.3 g/cm³-1.7 g/cm³, 1.3 g/cm³-1.65 g/cm³, 1.3 g/cm³-1.6 g/cm³, or 1.3 g/cm³-1.55 g/cm³. The inventors have found in further research that the true density of the carbonaceous material satisfying the foregoing specified range helps to further improve the gram capacity and first-cycle coulombic efficiency of the carbonaceous material.

When the true density of the carbonaceous material is small, it is considered that the carbonaceous material has abundant capillary pore structures and good closed-pore effect. In this case, the space which a calibration liquid (for example, n-butyl alcohol) enters is less than the actual pore space of the carbonaceous material, and the pore structures which are not entered can store active ions. In addition, it is difficult for the electrolyte to enter the inside of the particles of the carbonaceous material, which reduces the consumption of active ions during the formation of the SEI film. Moreover, the true density of the carbonaceous material should not be excessively low, because in this circumstance, it is possibly difficult for active ions to be intercalated due to overly good closed-pore effect of the carbonaceous material. When the true density of the carbonaceous material is large, the calibration liquid (for example, n-butyl alcohol) easily infiltrates the inside of the particles, and it is considered that in this case, the carbonaceous material has poor closed-pore effect and abundant large mesoporous structures and/or macroporous structures, which causes that capillary pore structures are easily exposed to the electrolyte and in turn the storage space for active ions is reduced, resulting in reduced gram capacity and first-cycle coulombic efficiency of the carbonaceous material.

In this application, the true density of the carbonaceous material has a meaning well known in the art and can be measured by using an instrument and a method known in the art. For example, the true density can be measured by using the Archimedes immersion volume displacement method, and the calibration liquid can be n-butyl alcohol. The test instrument can be a powder true density meter.

In some embodiments, the carbonaceous material may have a regular or irregular morphology, for example, the carbonaceous material may have an irregular polygonal morphology.

In some embodiments, an element C content in the carbonaceous material may be 95wt%-98wt%.

In some embodiments, an element O content in the carbonaceous material may be 1wt%-5wt%.

In some embodiments, an element H content in the carbonaceous material may be < 0.4wt%.

In some embodiments, an element N content in the carbonaceous material may be < 2wt%.

In some embodiments, a sum of the element C, O, H, and N contents in the carbonaceous material may be 99wt%-99.5wt%.

In some embodiments, an impurity element content in the carbonaceous material is low, where the impurity elements mainly include S, K, Ca, and Fe, where an element S content may be < 0.0021wt%, an element K content may be < 0.0019wt%, an element Ca content may be < 0.0011wt%, and an element Fe content may be < 0.0010wt%.

In some embodiments, in a Raman spectrum of the carbonaceous material, I_{d}/I_{g} is 1.0-1.3, where I_{d} represents an intensity of a peak d at a Raman shift within a range of 1350 ± 50 cm⁻¹, and I_{g} represents an intensity of a peak g at a Raman shift within a range of 1580 ± 50 cm⁻¹. For example, I_{d}/I_{g} may be 1.0, 1.05, 1.1, 1.15, 1.2, 1.25, 1.3, or within a range defined by any of the foregoing values. Optionally, I_{d}/I_{g} may be 1.05-1.15.

The Raman spectrum of the carbonaceous material can be tested by using a Raman spectrometer. During the test, the intensity of the peak d and the intensity of the peak g at 100 points are acquired, I_{d}/I_{g} at the 100 points are calculated, the largest and smallest 30 of I_{d}/I_{g} are removed, and the average of the remaining 40 of I_{d}/I_{g} is taken as I_{d}/I_{g} of the carbonaceous material. The test instrument can be a Horiba LabRAM HR800 Raman spectrometer. The test conditions can be excitation wavelength of 532 nm, grating of 600 lines, objective lens of 50x, and integration time of 10s for accumulated 3 times by surface scanning.

The peak d results from lattice defects of carbon atoms, and the peak g results from in-plane vibrations of sp2 carbon atoms. In the carbonaceous material structure, the intensity of the peak d is related to the number of defects in the carbonaceous material structure, and the intensity of the peak g is related to the number of graphite microcrystals in the carbonaceous material structure, so I_{d}/I_{g} can characterize a degree of orderliness of the carbonaceous material structure. A smaller I_{d}/I_{g} means a higher degree of orderliness of the carbonaceous material structure, a higher integrity of the carbon plane, and increased first-cycle coulombic efficiency but lower gram capacity and poorer rate performance of the carbonaceous material. The carbonaceous material of this application satisfies I_{d}/I_{g} being 1.0-1.3. In this case, the degree of orderliness of the carbonaceous material structure is moderate, so the carbonaceous material has higher gram capacity, higher first-cycle coulombic efficiency, and good rate performance.

In some embodiments, an interlayer spacing of a (002) crystal plane of the carbonaceous material is ≥ 0.37 nm, and optionally 0.37 nm-0.42 nm.

In some embodiments, in an X-ray diffraction pattern of the carbonaceous material, a value of 2θ corresponding to a (002) crystal plane peak is between 22° and 24°.

In this application, the interlayer spacing of the (002) crystal plane of the carbonaceous material can be measured in accordance with JIS K 0131-1996 and JB/T 4220-2011 by using an X-ray diffractometer. The test instrument can be a Bruker D8 Discover X-ray diffractometer.

In some embodiments, a particle size by volume Dᵥ50 of the carbonaceous material may be 4 µm-6 µm.

In some embodiments, a particle size by volume Dᵥ90 of the carbonaceous material may be 8 µm-16 µm.

In some embodiments, the carbonaceous material has both a particle size by volume Dᵥ50 of 4 µm-6 µm and a particle size by volume Dᵥ90 of 8 µm-16 µm.

The particle size by volume Dᵥ50 and/or Dᵥ90 of the carbonaceous material being within a suitable range helps to improve transport performance for active ions and electrons, thereby further improving the rate performance of the secondary battery.

In this application, the particle sizes by volume Dᵥ50 and Dᵥ90 of the carbonaceous material have meanings well known in the art, which indicate particle sizes of the material corresponding to cumulative volume distribution percentages reaching 50% and 90% respectively, and can be measured by using an instrument and a method known in the art. For example, the particle size by volume can be easily measured in accordance with GB/T 19077-2016 particle size distribution laser diffraction method by using a laser particle size analyzer. The test instrument can be a laser particle size analyzer of Mastersizer 2000E from Malvern Instruments Ltd. of UK.

In some embodiments, a specific surface area of the carbonaceous material is 0.1 m²/g-20 m²/g, and optionally 1 m²/g-20 m²/g. With the specific surface area of the carbonaceous material being within a suitable range, the carbonaceous material can simultaneously have higher gram capacity and first-cycle coulombic efficiency and better rate performance. In addition, with the specific surface area of the carbonaceous material being within a suitable range, a strong bonding force can be present between the carbonaceous material and a binder, which can increase cohesion force and adhesion force of a negative electrode plate and reduce volume swelling of the negative electrode plate during cycling, enabling the secondary battery to have better cycling performance.

In this application, the specific surface area of the carbonaceous material has a meaning well known in the art and can be measured by using an instrument and a method known in the art. For example, the specific surface area can be measured in accordance with GB/T 19587-2017 by using the nitrogen adsorption specific surface area analysis test method and calculated by using the BET (Brunauer Emmett Teller) method. The nitrogen adsorption specific surface area analysis test can be carried out by using a surface area and pore size analyzer of ASAP 3020 from Micromeritics company in USA.

In some embodiments, a powder compacted density of the carbonaceous material under a force of 50000 N is 0.90 g/cm³-1.05 g/cm³, and optionally 0.92 g/cm³-1.02 g/cm³. The powder compacted density of the carbonaceous material being within a suitable range can improve a compacted density of the negative electrode plate, thereby improving the energy density of the secondary battery.

In this application, the powder compacted density of the carbonaceous material has a meaning well known in the art and can be measured by using an instrument and a method known in the art. For example, the powder compacted density can be measured in accordance with the standard GB/T24533-2009 by using an electronic pressure testing machine (for example, UTM7305). An example test method is as follows: Weigh 1 g of carbonaceous material, add it to a mold with a bottom area of 1.327 cm², pressurize it to 5000 kg (equivalent to 50000 N), hold the pressure for 30s, release the pressure, hold for 10s, record the data, and then calculate the powder compacted density of the carbonaceous material under a force of 50000 N.

In some embodiments, a tap density of the carbonaceous material is 0.78 g/cm³-0.95 g/cm³, and optionally 0.83 g/cm³-0.93 g/cm³. The tap density of the carbonaceous material being within a suitable range can improve the compacted density of the negative electrode plate, thereby improving the energy density of the secondary battery.

In this application, the tap density of the carbonaceous material has a meaning well known in the art and can be measured by using an instrument and a method known in the art. For example, the tap density can be measured in accordance with GB/T 5162-2006 by using a powder tap density tester. The test instrument can be Bettersize BT-301.

### Preparation method of carbonaceous material

A second aspect of the embodiments of this application provides a preparation method of carbonaceous material, including the following steps: S10. providing a carbon source: the carbon source is a cellulose-based biomass material; S20. performing low-temperature pre-carbonization: in a protective gas atmosphere, the carbon source is heated to a first temperature T1 at a first temperature rise velocity and maintained at that temperature for a first time t1 to obtain a first intermediate product; and S30. performing high-temperature carbonization: in the protective gas atmosphere, the obtained first intermediate product is heated to a second temperature T2 at a second temperature rise velocity and maintained at that temperature for a second time t2 to obtain a carbonaceous material, where the carbonaceous material has an adsorption velocity v that satisfies 0.015 ≤ v ≤ 0.050 when subjected to an adsorption test using water vapor at a constant temperature and humidity of 25°C and 40% RH.

The water vapor adsorption test is performed under the following conditions: in a constant temperature and humidity chamber at 25°C and 40% RH, the carbonaceous material with a mass of m₁ is placed in a container, and a water vapor adsorption mass m₂ and a water vapor adsorption time t are recorded when the water vapor adsorption of the carbonaceous material reaches equilibrium, and the water vapor adsorption velocity is v = m₂/(m₁ × t), where m₁ is measured in g, m₂ is measured in g, and t is measured in h.

In this application, the cellulose-based biomass material is used as the carbon source for preparing the carbonaceous material. Cellulose is a chain macromolecular organic substance with high crystallinity in biomass materials. It has high thermal stability and a wide adjustable range of pyrolysis process parameters. In addition, the pore structures formed during conversion of the chain macromolecular organic substance into the carbonaceous material have high controllability, which can allow the carbonaceous material to have a suitable water vapor adsorption velocity and also helps to improve the platform capacity. When the cellulose-based biomass material is not used as the carbon source or the biomass material used does not contain cellulose, the carbonaceous material prepared therefrom has pore structures with poor controllability and a low proportion of capillary pore structures, which is manifested by an excessively low water vapor adsorption velocity. In some embodiments, in the cellulose-based biomass material, a cellulose content may be greater than 0wt% and less than or equal to 100wt%, and optionally 10wt%-100wt%, 20wt%-100wt%, 30wt%-100wt%, or 40wt%-100wt%. This helps to improve the controllability of the pore structures of the carbonaceous material and allows the carbonaceous material to have a suitable water vapor adsorption velocity.

The preparation process of the carbonaceous material includes at least a low-temperature pre-carbonization process and a high-temperature carbonization process. Low-temperature pre-carbonization can control the structural characteristics and surface characteristics of the carbon skeleton and appropriately increase a carbon yield. In addition, it can reduce toughness of the cellulose-based biomass material, and facilitates subsequent crushing and washing and purifying. High-temperature carbonization can cause a closed-pore effect on the biomass carbon obtained from low-temperature pre-carbonization, and thus reduces a contact area between the carbonaceous material and the electrolyte, which means that the consumption of active ions is reduced during the formation of the SEI film, improving the first-cycle coulombic efficiency of the carbonaceous material. High-temperature carbonization can also promote aromatization of the biomass carbon obtained from low-temperature pre-carbonization, which can improve the degree of orderliness and conductivity of the carbonaceous material and can remove excess elements O and H on the carbon skeleton structure, helping to form an ordered pseudo-graphite microcrystalline structure.

Therefore, the carbonaceous material obtained by using the preparation method provided in this application can have high gram capacity, high first-cycle coulombic efficiency, and high structural stability, and can allow a secondary battery to simultaneously have high energy density, long service life, and good rate performance. In addition, compared with existing commercialized hard carbon, the carbonaceous material obtained by using the preparation method in this application has significantly improved gram capacity, first-cycle coulombic efficiency, and rate performance.

The inventors have also found in research that the cellulose-based biomass material needs to have a low ash content. Ash not only undergoes catalytic reactions during low-temperature pre-carbonization, which consumes the element C content and reduces active ion storage sites, but also increases complexity and production costs of washing and purifying. In addition, during the subsequent high-temperature carbonization, the metal impurities in ash are reduced to elemental metals and then agglomerate. The agglomeration of the elemental metals leads to collapse of the carbon skeleton structure, especially collapse of capillary pore structures, and in turn results in reduced storage space for active ions of the obtained carbonaceous material and reduced capacity, which is manifested by an excessively low water vapor adsorption velocity. In addition, the metal impurities also have catalytic activity, which intensifies decomposition of the carbon skeleton structure during cracking and causes the pore structures to tend to form large mesoporous structures and/or macroporous structures with a larger size, resulting in poor stability of the carbon skeleton structure and an increased proportion of the electrolyte infiltration region inside the obtained carbonaceous material. Consequently, the consumption of active ions is increased during the formation of the SEI film, and the initial irreversible capacity loss is increased, resulting in reduced first-cycle coulombic efficiency of the carbonaceous material. In some embodiments, in the cellulose-based biomass material, an ash content may be 0wt%-5wt%, and optionally 0wt%-4wt%, 0wt%-3wt%, 0wt%-2wt%, or 0wt%-1wt%. This can reduce unfavorable effects of the impurities on the carbonaceous material, improves the gram capacity, first-cycle coulombic efficiency, and structural stability of the carbonaceous material, and also helps to reduce the true density of the carbonaceous material.

In some embodiments, optionally, in the cellulose-based biomass material, a cellulose content is greater than 0wt% and less than or equal to 100wt%, and an ash content is 0wt%-5wt%.

The cellulose-based biomass material may also include hemicellulose. Hemicellulose is an amorphous polymer substance with a small molecular weight in biomass materials, which is easily decomposed into small-molecule sugars and then volatilizes during low-temperature pre-carbonization, facilitating the formation of the pore structures. However, its content should not be excessively high. When its content is higher than 70wt%, it leads to poor stability of the carbon skeleton structure, poor closed-pore effect, an increased proportion of large mesoporous structures and/or macroporous structures in the carbonaceous material, an increased proportion of the electrolyte infiltration region inside the carbonaceous material, and increased initial irreversible capacity loss, resulting in reduced first-cycle coulombic efficiency. In some embodiments, in the cellulose-based biomass material, a hemicellulose content may be 0wt%-70wt%, and optionally 0wt%-60wt%, 0wt%-50wt%, 0wt%-40wt%, Owt%-30wt%, or 0wt%-20wt%.

The cellulose-based biomass material may also include lignin. Lignin is a benzene ring-containing macromolecular organic substance with high crosslinking degree, which facilitates formation of carbon hexagonal rings during low-temperature pre-carbonization and helps to improve the stability of the carbon skeleton structure, thereby helping to improve the rate performance of the secondary battery. However, the pore structures formed by lignin have poor controllability. Therefore, when the lignin content is excessively high, for example, greater than 60wt%, it leaves limited room for improvement in platform capacity of the obtained carbonaceous material. In some embodiments, in the cellulose-based biomass material, a lignin content is 0wt%-60wt%, and optionally 5wt%-60wt%, 10wt%-60wt%, 10wt%-50wt%, or 15wt%-50wt%.

In some embodiments, in the cellulose-based biomass material, a cellulose content is greater than 0wt% and less than or equal to 100wt%, a hemicellulose content is 0wt%-70wt%, a lignin content is 0wt%-60wt%, and an ash content is 0wt%-5wt%. Optionally, in the cellulose-based biomass material, the cellulose content is greater than or equal to 20wt% and less than 100wt%, the hemicellulose content is 0wt%-30wt%, the lignin content is 10wt%-60wt%, and the ash content is 0wt%-2wt%. This helps the obtained carbonaceous material to better have high gram capacity, high first-cycle coulombic efficiency, and high structural stability, thereby further improving the energy density, service life, and rate performance of the secondary battery.

In some embodiments, in the cellulose-based biomass material, the cellulose content may be 100wt%, meaning that the cellulose-based biomass material may directly use cellulose as the carbon source. This helps the obtained carbonaceous material to have high capacity, but slightly reduced stability of the carbon skeleton structure formed during preparation, thereby slightly reducing the improvement effect on the rate performance of the secondary battery.

In this application, the cellulose content can be measured by using the acid-hydrolyzed anthrone colorimetric method. Cellulose can be hydrolyzed to β-D-glucose under acidic conditions, and β-D-glucose is dehydrated to form β-furfural compounds in a strong acidic environment, which condense with anthrone through dehydration to produce blue-green furfural derivatives. The product has a characteristic absorption peak at 620 nm, and the cellulose content can be quantitatively measured based on changes in absorbance value. For example, the acid may be sulfuric acid.

In this application, the hemicellulose content can be measured by using the DNS colorimetric method. Hemicellulose is converted into reducing sugars after acid treatment, and the reducing sugars react with DNS to produce a reddish-brown substance. The product has a characteristic absorption peak at 540 nm, and the hemicellulose content can be quantitatively measured based on changes in absorbance value.

In this application, the lignin content can be measured by using the acetylation method. Phenolic hydroxyl groups in lignin are acetylated to form acetylated lignin. The product has a characteristic absorption peak at 280 nm, and the lignin content can be quantitatively measured based on changes in absorbance value.

In this application, the ash content can be measured in accordance with GB/T 28731-2012.

In some embodiments, the cellulose-based biomass material includes one or more of woody biomass materials satisfying the foregoing requirements of this application, and optionally includes one or more of hardwood, softwood, and nut shell, for example, may include one or more of pine, moso bamboo, and walnut shell.

In some embodiments, the preparation method further includes the step of pretreating the cellulose-based biomass material. The pre-treatment process may include crushing, washing, and drying steps. Crushing the cellulose-based biomass material is conducive to filling. Cleaning can remove impurities apparently attached to the surface of the cellulose-based biomass material, so as to avoid affecting the subsequent low-temperature pre-carbonization process. Drying can remove moisture attached to the surface of the cellulose-based biomass material and some bulk-phase moisture, thereby reducing influence of the moisture on the subsequent low-temperature pre-carbonization process.

In some embodiments, the first temperature rise velocity is ≤ 10°C/min, and optionally 1°C/min-10°C/min, 1°C/min-5°C/min, or 1°C/min-3°C/min. The first temperature rise velocity being within a suitable range helps the obtained carbonaceous material to have a suitable water vapor adsorption velocity, high capacity, high first-cycle coulombic efficiency, and high structural stability. When the first temperature rise velocity is excessively high, the prepared carbonaceous materials has pore structures with poor controllability and a low proportion of capillary pore structures, which is manifested by a low water vapor adsorption velocity.

In some embodiments, the first temperature T1 is 150°C-1000°C, for example, the first temperature T1 may be 200°C, 300°C, 400°C, 500°C, 600°C, 700°C, 800°C, 900°C, 1000°C, or within a range defined by any of the foregoing values. Optionally, the first temperature T1 is 200°C-900°C, 300°C-700°C, or 300°C-600°C. The first temperature being within a suitable range helps the obtained carbonaceous material to have a suitable water vapor adsorption velocity, high capacity, high first-cycle coulombic efficiency, and high structural stability. As the first temperature increases, more pore structures are formed, and the proportion of capillary pore structures increases. However, an excessively high first temperature leads to an accelerated volatilization velocity, an increased size of the formed pore structures, and poorer stability of the carbon skeleton structure. In addition, it also leads to poor closed-pore effect during high-temperature carbonization, an increased proportion of large mesoporous structures and/or macroporous structures in the carbonaceous material, an increased proportion of the electrolyte infiltration region inside the carbonaceous material, and increased initial irreversible capacity loss, resulting in reduced first-cycle coulombic efficiency. Moreover, the proportion of capillary pore structures in the carbonaceous material is reduced, which is manifested by a low water vapor adsorption velocity.

In some embodiments, the first time t1 is 1 h-20 h, and optionally 5 h-20 h. Persons skilled in the art can select a suitable first time within the foregoing range according to the used first temperature and first temperature rise velocity. For example, when the first temperature is high and/or the first temperature rise velocity is low, the first time can be appropriately shortened.

In S20, adjusting one or more of the first temperature rise velocity, the first temperature, and the first time to be within the foregoing ranges helps to better control the carbon skeleton structure and surface, improve the effect of low-temperature pre-carbonization, and obtain a carbonaceous material with a suitable water vapor adsorption velocity.

In some embodiments, the second temperature rise velocity is ≤ 10°C/min, and optionally 0.5°C/min-10°C/min. However, this application is not limited thereto, and the second temperature rise velocity can be adjusted based on actual situations.

In some embodiments, the second temperature T2 is 1000°C-1600°C, for example, may be 1000°C, 1050°C, 1100°C, 1150°C, 1200°C, 1250°C, 1300°C, 1350°C, 1400°C, 1450°C, 1500°C, 1550°C, 1600°C, or within a range defined by any of the foregoing values. Optionally, the second temperature T2 is 1200°C-1500°C. The second temperature being within a suitable range helps the obtained carbonaceous material to have a suitable water vapor adsorption velocity, high capacity, and high first-cycle coulombic efficiency. When the second temperature is low, there are many oxygen-containing functional groups on the surface of the carbonaceous material, and these oxygen-containing functional groups have good hydrophilicity, which makes the carbonaceous material show a fast water vapor adsorption velocity and a short adsorption time. However, in this case, the closed-pore effect of the pore structures is poor, and there are many large mesoporous structures and/or macroporous structures in the carbonaceous material, which leads to an increased proportion of the electrolyte infiltration region inside the carbonaceous material, and increased initial irreversible capacity loss, resulting in reduced first-cycle coulombic efficiency. When the second temperature increases, the closed-pore effect of the pore structures improves, which can reduce the consumption of active ions during the formation of the SEI film and increase the active ion storage sites of the carbonaceous material, thereby improving the capacity and first-cycle coulombic efficiency. However, an excessively high second temperature leads to a qualitative change in the microstructure of the carbonaceous material, which is unfavorable to the storage of active ions, and is manifested by a decreased water vapor adsorption velocity.

In some embodiments, the second time t2 is 1 h-12 h, and optionally 3 h-10 h. Persons skilled in the art can select a suitable first time within the foregoing range according to the used second temperature and second temperature rise velocity. For example, when the second temperature is high and/or the second temperature rise velocity is low, the second time can be appropriately shortened.

In S30, adjusting one or more of the second temperature rise velocity, the second temperature, and the second time to be within the foregoing ranges helps to improve the closed-pore effect of the pore structures, improve the effect of high-temperature carbonization, and obtain a carbonaceous material with a suitable water vapor adsorption velocity.

In some embodiments, t1 + t2 is 10 h-30 h. This helps the obtained carbonaceous material to have a suitable water vapor adsorption velocity, high capacity, high first-cycle coulombic efficiency, and high structural stability.

In some embodiments, after S20 and before S30, the method further includes the following step: crushing the first intermediate product obtained in S20, or washing and purifying the first intermediate product obtained in S20, or crushing and then washing and purifying the first intermediate product obtained in S20, to obtain a first intermediate product with an ash content of ≤ 0.01wt%, where the washing and purifying process includes at least an acidic solution washing step and an alkaline solution washing step. This helps to further improve the gram capacity, first-cycle coulombic efficiency, and structural stability of the carbonaceous material, and also helps to reduce the true density of the carbonaceous material.

Crushing can reduce a particle size of the first intermediate product, thereby helping to obtain a carbonaceous material of a desired size. In some embodiments, a particle size by volume Dᵥ50 of the crushed particles is 4 µm-6 µm. In some embodiments, a particle size by volume Dᵥ90 of the crushed particles is 8 µm-16 µm. In some embodiments, the crushed particles have a particle size by volume Dᵥ50 of 4 µm-6 µm and a particle size by volume Dᵥ90 of 8 µm-16 µm. Certainly, in some embodiments, the crushing step may alternatively be omitted.

Washing and purifying can remove inorganic impurities, water-soluble impurities, and the like in the first intermediate product, so as to avoid that metal impurities are reduced to elemental metals and then agglomerate during the subsequent high-temperature carbonization. The agglomeration of the elemental metals leads to collapse of the carbon skeleton structure, especially collapse of capillary pore structures, and in turn results in reduced storage space for active ions of the obtained carbonaceous material and reduced capacity. In addition, the metal impurities also have catalytic activity, which intensifies decomposition of the carbon skeleton structure during cracking and causes the pore structures to tend to form large mesoporous structures and/or macroporous structures with a larger size, resulting in an increased proportion of the electrolyte infiltration region inside the obtained carbonaceous material. Consequently, the consumption of active ions is increased during the formation of the SEI film, and the initial irreversible capacity loss is increased, resulting in reduced first-cycle coulombic efficiency. The washing and purifying process includes at least an acidic solution washing step and an alkaline solution washing step. The acidic solution is mainly used to remove the metal impurities in the first intermediate product, and the alkaline solution is mainly used to remove Si-containing impurities and the like in the first intermediate product that are unable to react with acids, so as to fully ensure the removal of the impurities and reduce the unfavorable effects of the impurities on the carbonaceous material, thereby improving the gram capacity and first-cycle coulombic efficiency of the carbonaceous material.

In this application, crushing needs to be performed before washing and purifying, so that the surface of the first intermediate product is exposed as much as possible during the subsequent washing and purifying, facilitating full contact between the particles and the washing solution and improving the washing and purifying effects. If crushing is performed after washing and purifying, some large-sized raw materials may substantially retain their original form after pyrolysis, and the washing solution may not be able to enter the bulk phase of the large particles, so impurities deeply encapsulated in the bulk phase of the large particles cannot be removed, resulting in insignificant washing and purifying effects.

Crushing can be a crushing process known in the art that is suitable for preparing carbonaceous materials. In some embodiments, crushing may include ball milling or air flow milling crushing.

The order of acidic solution washing and alkaline solution washing is not particularly limited. In some embodiments, the washing and purifying process sequentially includes the following steps: acidic solution washing, water washing, alkaline solution washing, water washing, and drying; or the washing and purifying process sequentially includes the following steps: alkaline solution washing, water washing, acidic solution washing, water washing, and drying. Deionized water can be used for washing for one or more times until the pH of the filtrate is neutral (that is, pH is 7 ± 0.5), and at that point, the washing step is considered to be completed. Drying may be blast drying or vacuum drying until a mass change rate of the material after an interval of 2 h is ≤ 0.1wt%, and at that point, the drying step is considered to be completed.

Parameters such as solute type, concentration, washing temperature, and washing time of the acidic solution and the alkaline solution are not particularly limited in this application, provided that the impurities are sufficiently removed.

In some embodiments, an H⁺ concentration of the acidic solution is 0.1 mol/L-6 mol/L, and optionally 1 mol/L-6 mol/L.

In some embodiments, a washing temperature of the acidic solution is 10°C-95°C, and optionally 30°C-95°C.

In some embodiments, a washing time of the acidic solution is 1 h-24 h, and optionally 10 h-24 h.

In some embodiments, in the acidic solution, a solute includes one or more of hydrochloric acid, nitric acid, sulfuric acid, and perchloric acid, and a solvent includes water.

Adjusting one or more of the H⁺ concentration, the washing temperature, the washing time, and the solute type of the acidic solution to be within the foregoing ranges helps to achieve sufficient washing and better remove metal impurities.

In some embodiments, an OH⁻ concentration of the alkaline solution is 0.1 mol/L-6 mol/L, and optionally 1 mol/L-6 mol/L.

In some embodiments, a washing temperature of the alkaline solution is 10°C-95°C, and optionally 30°C-95°C.

In some embodiments, a washing time of the alkaline solution is 1 h-24 h, and optionally 10 h-24 h.

In some embodiments, in the alkaline solution, a solute includes NaOH, KOH, or a combination thereof, and a solvent includes water.

Adjusting one or more of the OH⁻ concentration, the washing temperature, the washing time, and the solute type of the alkaline solution to be within the foregoing ranges helps to achieve sufficient washing.

In some embodiments, the washing and purifying step may alternatively be omitted.

In some embodiments, when an ash content of the obtained first intermediate product is ≥ 0.5wt%, washing and purifying needs to be performed to ensure that the ash content in the material before high-temperature carbonization is ≤ 0.01wt%.

The protective gas atmosphere in S20 and S30 is not limited to a particular type in this application. In some embodiments, the protective gas includes nitrogen, inert gas, or a combination thereof, and optionally, the inert atmosphere includes argon, helium, or a combination thereof. Optionally, a volume concentration of the gas may be 99.9% or above.

In some embodiments, the preparation method further includes: S40. crushing: the carbonaceous material obtained in S30 is crushed. In this case, the carbonaceous material agglomerating during the preparation can be crushed to achieve the desired particle size, facilitating preparation of a negative electrode slurry and a negative electrode plate. Certainly, in some embodiments, this step may be omitted.

In some embodiments, the preparation method includes the following steps: providing a carbon source: the carbon source is a cellulose-based biomass material, and in the cellulose-based biomass material, a cellulose content is greater than 0wt% and less than or equal to 100wt% and an ash content is 0wt%-5wt%; performing low-temperature pre-carbonization: in a protective gas atmosphere, the carbon source is heated to 150°C-1000°C and optionally 300°C-700°C at a velocity of < 10°C/min and maintained at that temperature for 1 h-20 h and optionally 5 h-20 h to obtain a first intermediate product; and performing high-temperature carbonization: in the protective gas atmosphere, the obtained first intermediate product is heated to 1000°C-1600°C and optionally 1200°C-1500°C at a velocity of ≤ 10°C/min and maintained at that temperature for 1 h-12 h and optionally 3 h-10 h to obtain a carbonaceous material, where the carbonaceous material has an adsorption velocity v that satisfies 0.015 ≤ v ≤ 0.050 when subjected to an adsorption test using water vapor at a constant temperature and humidity of 25°C and 40% RH. The carbonaceous material obtained in this way can better have high gram capacity, high first-cycle coulombic efficiency, and high structural stability, thereby further improving the energy density, service life, and rate performance of the secondary battery.

In some embodiments, the preparation method includes the following steps: providing a carbon source: the carbon source is a cellulose-based biomass material, and in the cellulose-based biomass material, a cellulose content is greater than 0wt% and less than or equal to 100wt% and an ash content is 0wt%-5wt%; performing low-temperature pre-carbonization: in a protective gas atmosphere, the carbon source is heated to 150°C-1000°C and optionally 300°C-700°C at a velocity of < 10°C/min and maintained at that temperature for 1 h-20 h and optionally 5 h-20 h to obtain a first intermediate product; and performing high-temperature carbonization: the obtained first intermediate product is crushed to a particle size by volume Dᵥ50 of 4 µm-6 µm and/or a particle size by volume Dᵥ90 of 8 µm-16 µm, and then, in the protective gas atmosphere, heated to 1000°C-1600°C and optionally 1200°C-1500°C at a velocity of ≤ 10°C/min and maintained at that temperature for 1 h-12 h and optionally 3 h-10 h to obtain a carbonaceous material, where the carbonaceous material has an adsorption velocity v that satisfies 0.015 ≤ v ≤ 0.050 when subjected to an adsorption test using water vapor at a constant temperature and humidity of 25°C and 40% RH. The carbonaceous material obtained in this way can better have high gram capacity, high first-cycle coulombic efficiency, and high structural stability, thereby further improving the energy density, service life, and rate performance of the secondary battery.

In some embodiments, the preparation method includes the following steps: providing a carbon source: the carbon source is a cellulose-based biomass material, and in the cellulose-based biomass material, a cellulose content is greater than 0wt% and less than or equal to 100wt% and an ash content is 0wt%-5wt%; performing low-temperature pre-carbonization: in a protective gas atmosphere, the carbon source is heated to 150°C-1000°C and optionally 300°C-700°C at a velocity of < 10°C/min and maintained at that temperature for 1 h-20 h and optionally 5 h-20 h to obtain a first intermediate product; and performing high-temperature carbonization: the obtained first intermediate product is crushed to a particle size by volume Dᵥ50 of 4 µm-6 µm and/or a particle size by volume Dᵥ90 of 8 µm-16 µm, sequentially followed by acidic solution washing, water washing, alkaline solution washing, water washing, and drying, and then, in the protective gas atmosphere, heated to 1000°C-1600°C and optionally 1200°C-1500°C at a velocity of ≤ 10°C/min and maintained at that temperature for 1 h-12 h and optionally 3 h-10 h to obtain a carbonaceous material, where the carbonaceous material has an adsorption velocity v that satisfies 0.015 ≤ v ≤ 0.050 when subjected to an adsorption test using water vapor at a constant temperature and humidity of 25°C and 40% RH. The carbonaceous material obtained in this way can better have high gram capacity, high first-cycle coulombic efficiency, and high structural stability, thereby further improving the energy density, service life, and rate performance of the secondary battery.

The preparation method according to the second aspect of the implementations of this application can be used for preparing the carbonaceous material according to any one of the embodiments in the first aspect of the implementations of this application. The preparation method of carbonaceous material provided in this application has a simple process and is suitable for commercial production. The preparation method of carbonaceous material provided in this application does not require additional conductive agent or other additives, such that a carbonaceous material obtained by using the preparation method provided in this application has a lower heteroatom content.

### Secondary battery

A third aspect of the embodiments of this application provides a secondary battery.

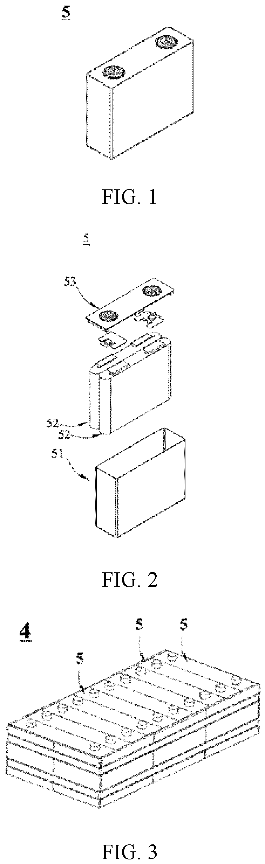

The secondary battery mentioned in the embodiments or implementations of this application is a single physical module that includes one or more battery cells for providing a higher voltage and capacity. For example, the secondary battery mentioned in this application may include a battery cell, a battery module, a battery pack, or the like. The battery cell is a smallest unit constituting a secondary battery, which can independently implement charge and discharge functions. Shape of the battery cell is not particularly limited in this application, and the battery cell may be cylindrical, rectangular, or of any other shapes. FIG. 1 shows a rectangular battery cell 5 as an example.

In some embodiments, the battery cell includes an electrode assembly and an electrolyte, and the battery cell may further include an outer package. The outer package may be used for packaging the electrode assembly and electrolyte. The outer package may be a hard shell, for example, a hard plastic shell, an aluminum shell, a steel shell, or the like. The outer package may alternatively be a soft package, for example, a soft pouch. Material of the soft package may be plastic, for example, one or more of polypropylene (PP), polybutylene terephthalate (PBT), and polybutylene succinate (PBS).

The electrode assembly typically includes a positive electrode plate, a negative electrode plate, and the like. During charging and discharging of the secondary battery, active ions are intercalated and deintercalated between the positive electrode plate and the negative electrode plate, and the electrolyte conducts the active ions between the positive electrode plate and the negative electrode plate. The electrode assembly may be made through winding and/or lamination.

In some embodiments, as shown in FIG. 2, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 is configured to cover the opening to close the accommodating cavity. The electrode assembly 52 is packaged in the accommodating cavity. There may be one or more electrode assemblies 52 in the battery cell 5, and the quantity may be adjusted as required.

In some embodiments of this application, battery cells may be assembled into a battery module, and the battery module may include a plurality of battery cells. A specific quantity may be adjusted based on application and capacity of the battery module. FIG. 3 is a schematic diagram of a battery module 4 as an example. As shown in FIG. 3, in the battery module 4, a plurality of battery cells 5 may be sequentially arranged in a length direction of the battery module 4. Certainly, the battery cells may alternatively be arranged in any other manner. Further, the plurality of battery cells 5 may be fastened through fasteners.

Optionally, the battery module 4 may further include a shell with an accommodating space, and the plurality of battery cells 5 are accommodated in the accommodating space.

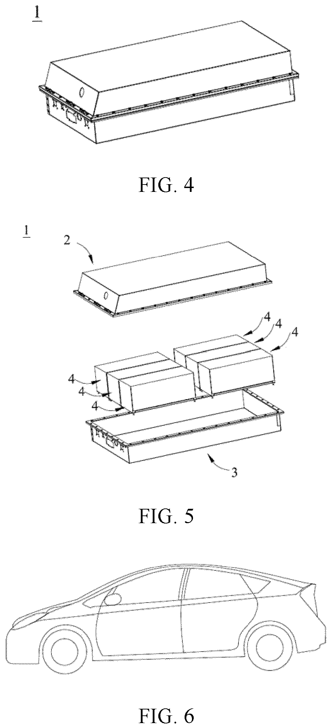

In some embodiments, the battery modules may be further assembled into a battery pack, and a quantity of battery modules included in the battery pack may be adjusted based on application and capacity of the battery pack. FIG. 4 and FIG. 5 are schematic diagrams of a battery pack 1 as an example. As shown in FIG. 4 and FIG. 5, the battery pack 1 may include a battery box and a plurality of battery modules 4 arranged in the battery box. The battery box includes an upper box body 2 and a lower box body 3. The upper box body 2 is configured to cover the lower box body 3 to form an enclosed space for accommodating the battery modules 4. The plurality of battery modules 4 may be arranged in the battery box in any manner.

### [Negative electrode plate]

In some embodiments, the negative electrode plate includes a negative electrode current collector and a negative electrode film layer disposed on at least one surface of the negative electrode current collector. For example, the negative electrode current collector has two opposite surfaces in its thickness direction, and the negative electrode film layer is disposed on either or both of the two opposite surfaces of the negative electrode current collector.

In some embodiments, the negative electrode film layer includes the carbonaceous material according to the first aspect of the implementations of this application or a carbonaceous material prepared by using the method according to the second aspect of the implementations of this application. This can allow the secondary battery to simultaneously have high energy density, long service life, and good rate performance.

In some embodiments, the negative electrode film layer may further include other negative electrode active materials than the carbonaceous material. In some embodiments, the other negative electrode active materials include but are not limited to one or more of natural graphite, artificial graphite, soft carbon, a silicon-based material, a tin-based material, and lithium titanate. The silicon-based material may include one or more of elemental silicon, silicon oxide, silicon-carbon composite, silicon-nitrogen composite, and a silicon alloy material. The tin-based material may include one or more of elemental tin, tin oxide, and a tin alloy material.

In some embodiments, the negative electrode film layer further optionally includes a negative electrode conductive agent. The negative electrode conductive agent is not limited to a particular type in this application. For example, the negative electrode conductive agent may include one or more of superconducting carbon, conductive graphite, acetylene black, carbon black, Ketjen black, carbon dots, carbon nanotubes, graphene, and carbon nanofiber.

In some embodiments, the negative electrode film layer further optionally includes a negative electrode binder. The negative electrode binder is not limited to a particular type in this application. For example, the negative electrode binder may include one or more of styrene-butadiene rubber (SBR), water-soluble unsaturated resin SR-1B, waterborne acrylic resin (for example, polyacrylic acid PAA, polymethylacrylic acid PMAA, and polyacrylic acid sodium PAAS), polyacrylamide (PAM), polyvinyl alcohol (PVA), sodium alginate (SA), and carboxymethyl chitosan (CMCS).

In some embodiments, the negative electrode film layer further optionally includes other additives. For example, the other additives may include a thickener, for example, sodium carboxymethyl cellulose (CMC) or a PTC thermistor material.

In some embodiments, the negative electrode current collector may be a metal foil current collector or a composite current collector. For example, a copper foil may be used as the metal foil. The composite current collector may include a polymer material matrix and a metal material layer formed on at least one surface of the polymer material matrix. For example, the metal material may include one or more of copper, copper alloy, nickel, nickel alloy, titanium, titanium alloy, silver, and silver alloy. For example, the polymer material matrix may include one or more of polypropylene (PP), polyethylene terephthalate (PET), polybutylene terephthalate (PBT), polystyrene (PS), and polyethylene (PE).

The negative electrode film layer is typically formed by applying a negative electrode slurry onto the negative electrode current collector, followed by drying and cold pressing. The negative electrode slurry is typically formed by dispersing the negative electrode active material, the optional conductive agent, the optional binder, and the optional other additives in a solvent and stirring them to uniformity. The solvent may be but is not limited to N-methylpyrrolidone (NMP) or deionized water.

The negative electrode plate does not exclude additional functional layers other than the negative electrode film layer. For example, in some embodiments, the negative electrode plate of this application further includes a conductive primer layer (for example, consisting of a conductive agent and a binder) disposed on the surface of the negative electrode current collector and sandwiched between the negative electrode current collector and the negative electrode film layer. In some embodiments, the negative electrode plate of this application further includes a protective layer covering the surface of the negative electrode film layer.

### [Positive electrode plate]

In some embodiments, the positive electrode plate includes a positive electrode current collector and a positive electrode film layer disposed on at least one surface of the positive electrode current collector. For example, the positive electrode current collector has two opposite surfaces in its thickness direction, and the positive electrode film layer is disposed on either or both of the two opposite surfaces of the positive electrode current collector.

The positive electrode current collector may be a metal foil current collector or a composite current collector. For example, an aluminum foil may be used as the metal foil. The composite current collector may include a polymer material matrix and a metal material layer formed on at least one surface of the polymer material matrix. For example, the metal material may include one or more of aluminum, aluminum alloy, nickel, nickel alloy, titanium, titanium alloy, silver, and silver alloy. For example, the polymer material matrix may include one or more of polypropylene (PP), polyethylene terephthalate (PET), polybutylene terephthalate (PBT), polystyrene (PS), and polyethylene (PE).

The positive electrode film layer typically includes a positive electrode active material, an optional binder, and an optional conductive agent. The positive electrode film layer is typically formed by applying a positive electrode slurry onto the positive electrode current collector, followed by drying and cold pressing. The positive electrode slurry is typically formed by dispersing the positive electrode active material, the optional conductive agent, the optional binder, and any other components in a solvent and stirring them to uniformity. The solvent may be but is not limited to N-methylpyrrolidone (NMP). For example, the binder for the positive electrode film layer may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin. For example, the conductive agent for the positive electrode film layer includes one or more of superconducting carbon, conductive graphite, acetylene black, carbon black, Ketjen black, carbon dots, carbon nanotubes, graphene, and carbon nanofiber.

The positive electrode active material may be a positive electrode active material for secondary batteries well known in the art.

When the secondary battery of this application is a lithium-ion battery, the positive electrode active material may include but is not limited to one or more of lithium-containing transition metal oxide, lithium-containing phosphate, and respective modified compounds thereof. Examples of the lithium transition metal oxide may include but are not limited to one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of the lithium-containing phosphate may include but are not limited to one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and respective modified compounds thereof.

In some embodiments, to further improve energy density of the secondary battery, the positive electrode active material for lithium-ion batteries may include one or more of lithium transition metal oxide with a general formula LiₐNi_{b}Co_{c}M_{d}OₑA_{f} and modified compounds thereof: 0.8 ≤ a ≤ 1.2, 0.5 ≤ b < 1, 0 < c < 1, 0 < d < 1, 1 ≤ e ≤ 2, and 0 ≤ f ≤ 1, and M includes one or more selected from Mn, Al, Zr, Zn, Cu, Cr, Mg, Fe, V, Ti, and B, and A includes one or more selected from N, F, S, and Cl.

For example, the positive electrode active material for lithium-ion batteries may include one or more of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄, and LiMnPO₄.

When the secondary battery of this application is a sodium-ion battery, the positive electrode active material may include but is not limited to one or more of sodium-containing transition metal oxide, a polyanionic material (for example, phosphate, fluorophosphate, pyrophosphate, and sulfate), and a Prussian blue material.

For example, the positive electrode active material for sodium-ion batteries may include one or more of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian blue material, and a material with a general formula XₚM'_{q}(PO₄)ᵣOₓY₃₋ₓ. In the general formula XₚM'_{q}(PO₄)ᵣOₓY₃₋ₓ, 0 < p ≤ 4, 0 < q ≤ 2, 1 ≤ r ≤ 3, and 0 ≤ x ≤ 2, and X includes one or more selected from H⁺, Li⁺, Na⁺, K⁺, and NH₄⁺, M' is a transition metal cation and optionally includes one or more selected from V, Ti, Mn, Fe, Co, Ni, Cu, and Zn, and Y is a halogen anion and optionally includes one or more selected from F, Cl, and Br.

In this application, the modified compounds of the foregoing positive electrode active materials may be obtained through doping modification and/or surface coating modification to the positive electrode active materials.

### [Electrolyte]

The electrolyte is not limited to a particular type in this application, and can be selected based on actual needs. For example, the electrolyte may be selected from at least one of a solid electrolyte and a liquid electrolyte (that is, an electrolyte solution).

In some embodiments, the electrolyte is a liquid electrolyte, and the liquid electrolyte includes an electrolytic salt and a solvent.

The electrolytic salt is not limited to a specific type, and can be selected based on actual needs.

When the secondary battery of this application is a lithium-ion battery, for example, the electrolytic salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethane)sulfonimide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluoro bis(oxalato)phosphate (LiDFOP), and lithium tetrafluoro oxalato phosphate (LiTFOP).

When the secondary battery of this application is a sodium-ion battery, the electrolytic salt may include one or more of sodium hexafluorophosphate (NaPF₆), sodium tetrafluoroborate (NaBF₄), sodium perchlorate (NaClO₄), sodium hexafluoroarsenate (NaAsF₆), sodium bis(fluorosulfonyl)imide (NaFSI), sodium bis(trifluoromethane)sulfonimide (NaTFSI), sodium trifluoromethanesulfonate (NaTFS), sodium difluoro(oxalato)borate (NaDFOB), sodium bis(oxalato)borate (NaBOB), sodium difluorophosphate (NaPO₂F₂), sodium difluoro bis(oxalato)phosphate (NaDFOP), and sodium tetrafluoro oxalato phosphate (NaTFOP).

The solvent is not limited to a specific type, and can be selected based on actual needs. In some embodiments, for example, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), sulfolane (SF), methyl sulfonyl methane (MSM), ethyl methanesulfonate (EMS), and diethyl sulfone (ESE).

In some embodiments, the liquid electrolyte further optionally includes an additive. For example, the additive may include a negative electrode film-forming additive, or may include a positive electrode film-forming additive, or may include an additive capable of improving some performance of the battery, for example, an additive for improving overcharge performance of the battery, an additive for improving high-temperature performance of the battery, or an additive for improving low-temperature power performance of the battery.

### [Separator]

Secondary batteries using a liquid electrolyte and some secondary batteries using a solid electrolyte further include a separator. The separator is disposed between the positive electrode plate and the negative electrode plate for separation. The separator is not limited to a particular type in this application, and may be any well-known porous separator with good chemical stability and mechanical stability.

In some embodiments, material of the separator may include one or more of glass fiber, non-woven fabric, polyethylene, polypropylene, and polyvinylidene fluoride. The separator may be a single-layer film or a multi-layer composite film. When the separator is a multi-layer composite film, all layers may be made of the same or different materials.

### [Preparation method]

The preparation method of secondary battery of this application is well known. In some embodiments, the positive electrode plate, the separator, the negative electrode plate, and the electrolyte may be assembled to form a secondary battery. For example, the positive electrode plate, separator, and negative electrode plate may be made into an electrode assembly through winding and/or lamination; and the electrode assembly is placed into an outer package, followed by drying, and the electrolyte is injected, followed by processes such as vacuum packaging, standing, formation, and shaping, to obtain a battery cell. A plurality of battery cells may be further connected in series, parallel, or series-parallel to form a battery module A plurality of battery modules may be further connected in series, parallel, or series-parallel to form a battery pack. In some embodiments, the plurality of battery cells may alternatively directly form a battery pack.

### Electric apparatus

A fourth aspect of the implementations of this application provides an electric apparatus, where the electric apparatus includes the secondary battery of this application. The secondary battery may be used as a power source of the electric apparatus or an energy storage unit of the electric apparatus. The electric apparatus may be but is not limited to a mobile device (for example, a mobile phone, a tablet computer, or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

Specific type of the secondary battery may be selected for the electric apparatus based on requirements for using the electric apparatus, for example, a battery cell, a battery module, or a battery pack.

FIG. 6 is a schematic diagram of an electric apparatus as an example. The electric apparatus is a battery electric vehicle, a hybrid electric vehicle, a plug-in hybrid electric vehicle, or the like. To satisfy requirements of the electric apparatus for high power and high energy density, a battery pack or a battery module may be used as a power source.

In another example, the electric apparatus may be a mobile phone, a tablet computer, a notebook computer, or the like. Such electric apparatus is generally required to be light and thin and may use a battery cell as its power source.

### Examples

Content disclosed in this application is described in detail in the following examples. These examples are only for illustrative purposes because various modifications and changes made without departing from the scope of the content disclosed in this application are apparent to persons skilled in the art. Unless otherwise stated, all parts, percentages, and ratios reported in the following examples are based on mass, all reagents used in the examples are commercially available or synthesized in a conventional manner, and can be used directly without further treatment, and all instruments used in the examples are commercially available.

### Example 1

Pine was used as the carbon source, with a particle size of ≤ 1 mm, a cellulose content of 40wt%, a hemicellulose content of 23%, a lignin content of 27%, and an ash content of 1wt%.

In a nitrogen atmosphere, the pine was heated to 150°C (the first temperature T1) at 1°C/min (the first temperature rise velocity) and maintained at that temperature for 10 h (the first time t1), and then cooled to room temperature to obtain a first intermediate product.

The first intermediate product was crushed using an air flow mill to a particle size by volume Dᵥ50 of 4 µm-6 µm, washed with 3 mol/L high-chloric acid aqueous solution at 50°C for 10 h, washed with deionized water to neutrality, then washed with 3 mol/L NaOH aqueous solution at 80°C for 20 h, and washed with deionized water to neutrality, followed by blast drying to remove moisture, to obtain a first intermediate product with an ash content of < 0.01wt%.

In the nitrogen atmosphere, the first intermediate product obtained above was heated to 1400°C (the second temperature T2) at 0.5°C/min (the second temperature rise velocity) and maintained at that temperature for 6 h (the second time t2), and then a carbonaceous material was obtained.

In a constant temperature and humidity chamber at 25°C and 40% RH (that is, a percentage of the water vapor pressure in the air to the saturated vapor pressure of water was 40%), the carbonaceous material with a mass of m₁ was uniformly placed in a container with stack thickness of the carbonaceous material being ≤ 5 mm, and a water vapor adsorption mass m₂ and a water vapor adsorption time t were recorded when the water vapor adsorption of the carbonaceous material reached equilibrium, and the water vapor adsorption velocity was v = m₂/(m₁ × t), where m₁ was measured in g, m₂ was measured in g, and t was measured in h.

The true density of the carbonaceous material was measured by using the Archimedes immersion volume displacement method with n-butyl alcohol as the medium.

### Examples 2 to 19 and Comparative Examples 1 to 7

The preparation method of carbonaceous material was similar to that in Example 1 except that the parameters of the preparation process of the carbonaceous material were adjusted, which are detailed in Table 1.

### Performance test

The carbonaceous materials prepared in the examples and comparative examples were fully stirred and mixed with binder styrene-butadiene rubber (SBR), thickener sodium carboxymethyl cellulose (CMC-Na), and conductive agent carbon black at a mass ratio of 96.2:1.8:1.2:0.8 in an appropriate amount of solvent deionized water to form a uniform negative electrode slurry; and the negative electrode slurry was uniformly applied onto a surface of negative electrode current collector copper foil, and dried in an oven for later use. Ethylene carbonate (EC), ethyl methyl carbonate (EMC), and diethyl carbonate (DEC) were mixed at a volume ratio of 1:1:1 to obtain an organic solvent, and then NaPF₆ was dissolved in the organic solvent to prepare an electrolyte with a concentration of 1 mol/L. Then, with a sodium metal sheet as a counter electrode and a polyethylene (PE) film as a separator, a CR2430 button battery was assembled in an argon-protected glove box.

At 25°C, the button batteries prepared in the examples and comparative examples were first discharged to 0 V at a constant current density of 10 mA/g, and first-cycle discharge capacities of the button batteries were recorded. Then, the button batteries were charged to 2.0 V at a constant current density of 10 mA/g, and first-cycle charge capacities of the button batteries were recorded.

Reversible gram capacity of carbonaceous material (mAh/g) = first-cycle charge capacity of button battery/mass of carbonaceous material.

First-cycle coulombic efficiency of carbonaceous material (%) = first-cycle charge capacity of button battery/first-cycle discharge capacity of button battery × 100%.

Discharge capacities at 0.33C and 1C were obtained after the button battery was fully charged and fully discharged at 0.33C and 1C respectively, and the rate performance was characterized by a ratio of the discharge capacity at 1C to the discharge capacity at 0.33C. A higher ratio means better rate performance.

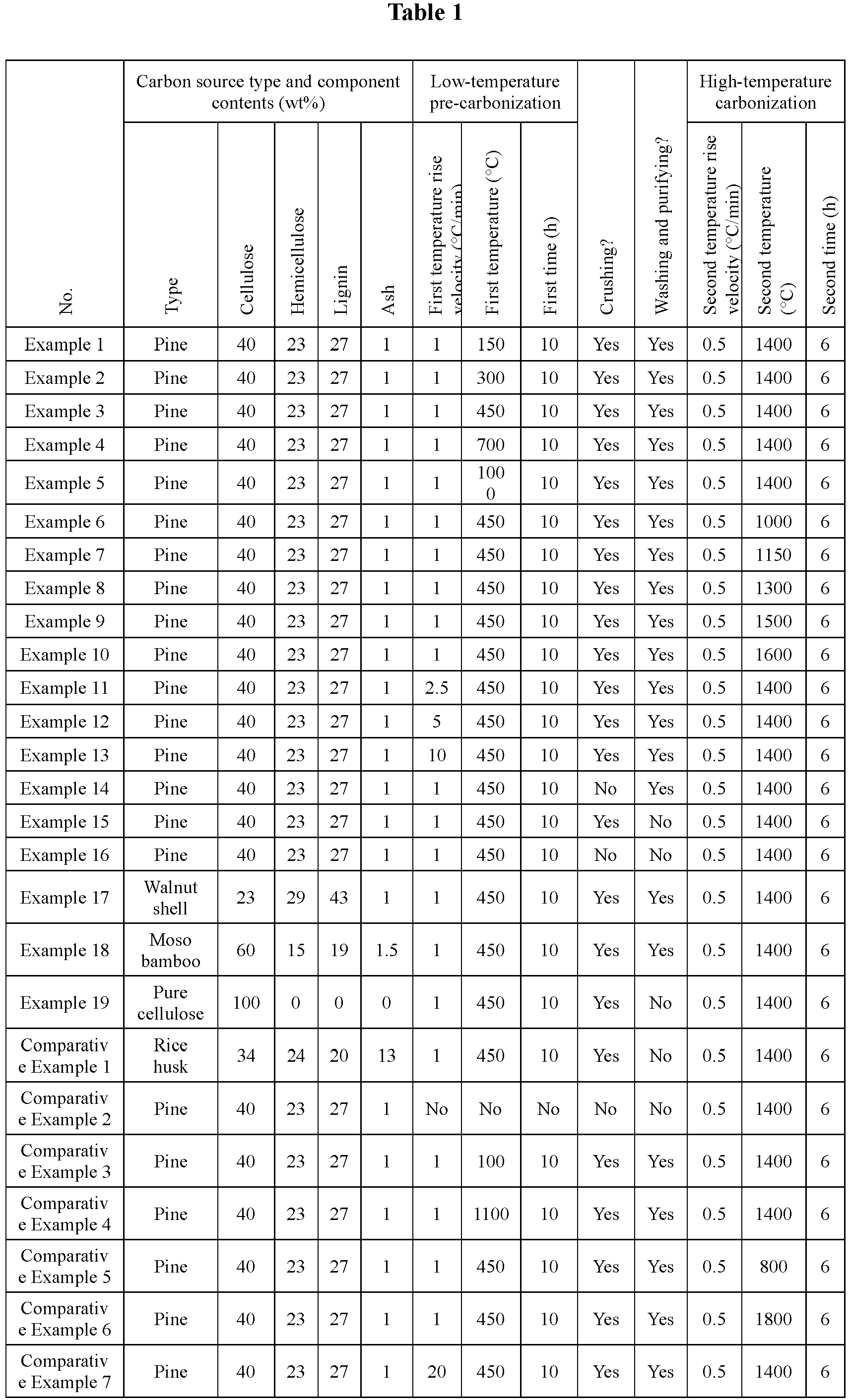

**Table 2**

| No. | Water vapor adsorption velocity v | Water vapor adsorption time (h) | True density (g/cm³) | Reversibl e gram capacity (mAh/g) | First-cycle coulombic efficiency (%) | Discharge capacity retention rate at 1C/1C vs. 0.33C/0.33C (%) |
|---|---|---|---|---|---|---|
| Example 1 | 0.016 | 5.0 | 1.77 | 302 | 84 | 76 |
| Example 2 | 0.025 | 6.0 | 1.54 | 356 | 87 | 79 |
| Example 3 | 0.043 | 5.5 | 1.45 | 383 | 91 | 85 |
| Example 4 | 0.036 | 5.0 | 1.81 | 333 | 85 | 87 |
| Example 5 | 0.032 | 5.5 | 1.72 | 311 | 83 | 83 |
| Example 6 | 0.046 | 3.0 | 1.91 | 300 | 80 | 75 |
| Example 7 | 0.043 | 4.0 | 1.88 | 318 | 83 | 77 |
| Example 8 | 0.040 | 5.0 | 1.65 | 344 | 86 | 83 |
| Example 9 | 0.032 | 6.0 | 1.42 | 372 | 90 | 86 |
| Example 10 | 0.020 | 6.5 | 1.34 | 351 | 85 | 84 |
| Example 11 | 0.039 | 5.7 | 1.43 | 376 | 90 | 85 |
| Example 12 | 0.023 | 6.0 | 1.57 | 350 | 88 | 84 |
| Example 13 | 0.018 | 5.4 | 1.65 | 332 | 84 | 81 |
| Example 14 | 0.030 | 5.0 | 1.53 | 343 | 83 | 79 |
| Example 15 | 0.032 | 5.0 | 1.47 | 361 | 85 | 82 |
| Example 16 | 0.030 | 5.0 | 1.51 | 341 | 81 | 81 |
| Example 17 | 0.036 | 6.0 | 1.50 | 362 | 90 | 88 |
| Example 18 | 0.046 | 5.5 | 1.48 | 388 | 90 | 83 |
| Example 19 | 0.050 | 6.0 | 1.53 | 400 | 89 | 83 |
| Comparative Example 1 | 0.012 | 4.0 | 2.10 | 153 | 45 | 60 |
| Comparative Example 2 | 0.014 | 5.0 | 1.75 | 291 | 82 | 74 |
| Comparative Example 3 | 0.013 | 5.0 | 1.73 | 293 | 82 | 75 |
| Comparative Example 4 | 0.011 | 7.5 | 1.78 | 278 | 77 | 69 |
| Comparative Example 5 | 0.055 | 3.5 | 2.01 | 266 | 75 | 72 |
| Comparative Example 6 | 0.006 | 5.0 | 1.20 | 271 | 81 | 76 |
| Comparative Example 7 | 0.014 | 6.0 | 1.79 | 267 | 82 | 72 |

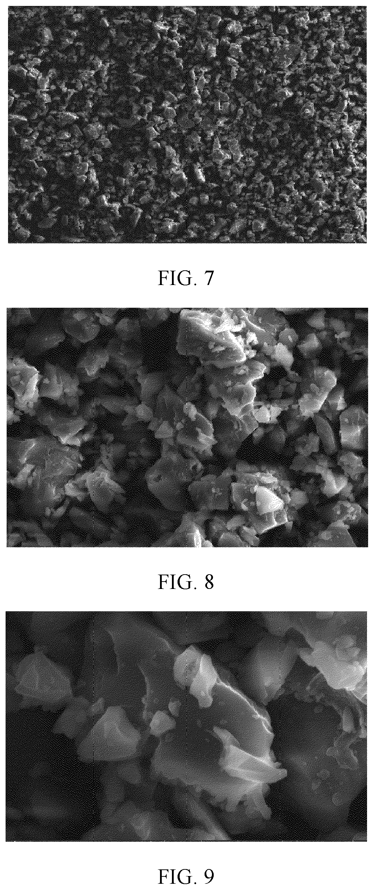

FIG. 7 to FIG. 9 are scanning electron microscope images of the carbonaceous material provided in this application at different magnifications. As shown in FIG. 7 to FIG. 9, the carbonaceous material provided in this application has an irregular polygonal morphology. It can be learned from the test results in Table 2 that at a constant temperature and humidity of 25°C and 40% RH, when the water vapor adsorption velocity v of the carbonaceous material is between 0.015 and 0.050, the carbonaceous material has high gram capacity, high first-cycle coulombic efficiency, and good rate performance.

At a constant temperature and humidity of 25°C and 40% RH, the water vapor adsorption velocities v of the carbonaceous materials prepared in Comparative Examples 1 to 7 are less than 0.015 or greater than 0.050, so the carbonaceous materials cannot have high gram capacity, high first-cycle coulombic efficiency, and good rate performance at the same time.

In Comparative Example 1, rice husk is used as the carbon source, and its ash content is higher than 5wt%. Ash undergoes catalytic reactions during low-temperature pre-carbonization, which consumes the element C content and reduces the active ion storage sites. In addition, during the subsequent high-temperature carbonization, the metal impurities in ash are reduced to elemental metals and then agglomerate. The agglomeration of the elemental metals leads to collapse of the carbon skeleton structure, especially collapse of capillary pore structures, and in turn results in reduced storage space for active ions of the obtained carbonaceous material and reduced capacity, which is manifested by an excessively low water vapor adsorption velocity. In addition, the metal impurities also have catalytic activity, which intensifies decomposition of the carbon skeleton structure during cracking and causes the pore structures to tend to form large mesoporous structures and/or macroporous structures with a larger size, resulting in an increased proportion of the electrolyte infiltration region inside the obtained carbonaceous material. Consequently, the consumption of active ions is increased during the formation of the SEI film, and the initial irreversible capacity loss is increased, resulting in reduced first-cycle coulombic efficiency.

In Comparative Example 2, low-temperature pre-carbonization is not performed during preparation of the carbonaceous material, which leads to poor closed-pore effect of the carbonaceous material, a low proportion of capillary pore structures, and a high proportion of large mesoporous structures and/or macroporous structures, and in turn leads to a high proportion of the electrolyte infiltration region inside the carbonaceous material and high initial irreversible capacity loss, resulting in low first-cycle coulombic efficiency.

It can also be learned from the test results of Examples 1 to 19 that when the water vapor adsorption time t of the carbonaceous material is further between 4.5 h and 7 h, the carbonaceous material can have higher gram capacity, first-cycle coulombic efficiency, and/or rate performance.

It can also be learned from the test results of Examples 1 to 19 that when the true density ρ of the carbonaceous material is further between 1.3 g/cm³-1.7 g/cm³, the carbonaceous material can have higher gram capacity, first-cycle coulombic efficiency, and/or rate performance.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A carbonaceous material, wherein the carbonaceous material has an adsorption velocity v that satisfies 0.015 ≤ v ≤ 0.050 when subjected to an adsorption test using water vapor at a constant temperature and humidity of 25°C and 40% RH,
wherein the water vapor adsorption test is performed under the following conditions: in a constant temperature and humidity chamber at 25°C and 40% RH, the carbonaceous material with a mass of m₁ is placed in a container, and a water vapor adsorption mass m₂ and a water vapor adsorption time t are recorded when the water vapor adsorption of the carbonaceous material reaches equilibrium, and the water vapor adsorption velocity is v = m₂/(m₁ × t), wherein m₁ is measured in g, m₂ is measured in g, and t is measured in h.

2. The carbonaceous material according to claim 1, wherein 0.020 ≤ v ≤ 0.050.

3. The carbonaceous material according to claim 1 or 2, wherein when the water vapor adsorption of the carbonaceous material reaches equilibrium, the water vapor adsorption time t is 1 h-12 h, and optionally 4.5 h-7 h.

4. The carbonaceous material according to any one of claims 1 to 3, wherein a true density ρ of the carbonaceous material is 1.0 g/cm³-2.2 g/cm³, and optionally 1.3 g/cm³-1.7 g/cm³.

5. The carbonaceous material according to any one of claims 1 to 4, wherein the carbonaceous material comprises a plurality of nanoporous structures, and optionally the carbonaceous material comprises a plurality of pore structures with a pore size below 10 nm.

6. The carbonaceous material according to any one of claims 1 to 5, wherein
in a Raman spectrum of the carbonaceous material, I_{d}/I_{g} is 1.0-1.3, and optionally 1.05-1.15, wherein I_{d} represents an intensity of a peak d at a Raman shift within a range of 1350 ± 50 cm⁻¹, and I_{g} represents an intensity of a peak g at a Raman shift within a range of 1580 ± 50 cm⁻¹; and/or
an interlayer spacing of a (002) crystal plane of the carbonaceous material is ≥ 0.37 nm, and optionally 0.37 nm-0.42 nm; and/or
in an X-ray diffraction pattern of the carbonaceous material, a value of 2θ corresponding to a (002) crystal plane peak is between 22° and 24°.

7. The carbonaceous material according to any one of claims 1 to 6, wherein the carbonaceous material satisfies at least one of the following conditions (1) to (5):
(1) a particle size by volume Dᵥ50 of the carbonaceous material is 4 µm-6 µm;
(2) a particle size by volume Dᵥ90 of the carbonaceous material is 8 µm-16 µm;
(3) a specific surface area of the carbonaceous material is 0.1 m²/g-20 m²/g, and optionally 1 m²/g-20 m²/g;
(4) a powder compacted density of the carbonaceous material under a force of 50000 N is 0.90 g/cm³-1.05 g/cm³, and optionally 0.92 g/cm³-1.02 g/cm³; and
(5) a tap density of the carbonaceous material is 0.78 g/cm³-0.95 g/cm³, and optionally 0.83 g/cm³-0.93 g/cm³.

8. A preparation method of carbonaceous material, comprising the following steps:
S10. providing a carbon source: the carbon source is a cellulose-based biomass material;
S20. performing low-temperature pre-carbonization: in a protective gas atmosphere, the carbon source is heated to a first temperature T1 at a first temperature rise velocity and maintained at that temperature for a first time t1 to obtain a first intermediate product; and
S30. performing high-temperature carbonization: in the protective gas atmosphere, the obtained first intermediate product is heated to a second temperature T2 at a second temperature rise velocity and maintained at that temperature for a second time t2 to obtain a carbonaceous material, wherein the carbonaceous material has an adsorption velocity v that satisfies 0.015 ≤ v ≤ 0.050 when subjected to an adsorption test using water vapor at a constant temperature and humidity of 25°C and 40% RH, wherein the water vapor adsorption test is performed under the following conditions: in a constant temperature and humidity chamber at 25°C and 40% RH, the carbonaceous material with a mass of m₁ is placed in a container, and a water vapor adsorption mass m₂ and a water vapor adsorption time t are recorded when the water vapor adsorption of the carbonaceous material reaches equilibrium, and the water vapor adsorption velocity is v = m₂/(m₁ × t), wherein m₁ is measured in g, m₂ is measured in g, and t is measured in h.

9. The method according to claim 8, wherein in the cellulose-based biomass material, a cellulose content is greater than 0wt% and less than or equal to 100wt%, and an ash content is 0wt%-5wt%.

10. The method according to claim 8 or 9, wherein
in the cellulose-based biomass material, a cellulose content is greater than or equal to 20wt% and less than 100wt%; and/or
in the cellulose-based biomass material, an ash content is 0wt%-2wt%.

11. The method according to claim 9 or 10, wherein
in the cellulose-based biomass material, a hemicellulose content is 0wt%-70wt%, and optionally 0wt%-30wt%; and/or
in the cellulose-based biomass material, a lignin content is 0wt%-60wt%, and optionally 10wt%-60wt%.

12. The method according to any one of claims 9 to 11, wherein the cellulose-based biomass material comprises one or more of woody biomass materials, optionally comprises one or more of hardwood, softwood, and nut shell, and more optionally comprises one or more of pine, moso bamboo, and walnut shell.

13. The method according to any one of claims 8 to 12, wherein
the first temperature rise velocity is 1°C/min-10°C/min, and optionally 1°C/min-3°C/min; and/or
the first temperature T1 is 150°C-1000°C, and optionally 300°C-700°C; and/or
the first time t1 is 1 h-20 h, and optionally 5 h-20 h.

14. The method according to any one of claims 8 to 13, wherein
the second temperature rise velocity is ≤10°C/min, and optionally 0.5°C/min-10°C/min; and/or
the second temperature T2 is 1000°C-1600°C, and optionally 1200°C-1500°C; and/or
the second time t2 is 1 h-12 h, and optionally 3 h-10 h.

15. The method according to any one of claims 8 to 14, wherein t1 + t2 is 10 h-30 h.

16. The method according to any one of claims 8 to 15, wherein after S20 and before S30, the method further comprises the following step: crushing the first intermediate product obtained in S20, or washing and purifying the first intermediate product obtained in S20, or crushing and then washing and purifying the first intermediate product obtained in S20, to obtain a first intermediate product with an ash content of ≤ 0.01wt%, wherein the washing and purifying process comprises at least an acidic solution washing step and an alkaline solution washing step.

17. The method according to claim 16, wherein the washing and purifying process sequentially comprises the following steps: acidic solution washing, water washing, alkaline solution washing, water washing, and drying; or the washing and purifying process sequentially comprises the following steps: alkaline solution washing, water washing, acidic solution washing, water washing, and drying.

18. The method according to claim 16 or 17, wherein the acidic solution satisfies at least one of the following conditions (1) to (4):
(1) an H⁺ concentration of the acidic solution is 0.1 mol/L-6 mol/L, and optionally 1 mol/L-6 mol/L;
(2) a washing temperature of the acidic solution is 10°C-95°C, and optionally 30°C-95°C;
(3) a washing time of the acidic solution is 1 h-24 h, and optionally 10 h-24 h; and
(4) in the acidic solution, a solute comprises one or more of hydrochloric acid, nitric acid, sulfuric acid, and perchloric acid, and a solvent comprises water.

19. The method according to any one of claims 16 to 18, wherein the alkaline solution satisfies at least one of the following conditions (1) to (4):
(1) an OH⁻ concentration of the alkaline solution is 0.1 mol/L-6 mol/L, and optionally 1 mol/L-6 mol/L;
(2) a washing temperature of the alkaline solution is 10°C-95°C, and optionally 30°C-95°C;
(3) a washing time of the alkaline solution is 1 h-24 h, and optionally 10 h-24 h; and
(4) in the alkaline solution, a solute comprises NaOH, KOH, or a combination thereof, and a solvent comprises water.

20. A secondary battery, comprising a negative electrode plate, wherein the negative electrode plate comprises the carbonaceous material according to any one of claims 1 to 7 or a carbonaceous material prepared by using the method according to any one of claims 8 to 19.

21. An electric apparatus, comprising the secondary battery according to claim 20.
